# EUROPEAN PATENT APPLICATION

(11) **EP 3 904 311 A1**
(43) Date of publication of application: **03.11.2021**
(21) Application number: 21168718.1
(22) Date of filing: 15.04.2021
(51) Int. Cl.: C04B 35/486, C04B 35/488, C04B 35/622, C04B 35/626, C04B 35/634, C23C 24/08, F01D 5/28

(54) **COMPOSITION FOR THERMAL BARRIER COATING**

(30) Priority: 01.05.2020 US 202016864657
(71) Applicant: General Electric Company, Schenectady, NY 12345 (US)
(72) Inventor: EVERHART, Richard Todd, Greenville, SC South Carolina 29615 (US); PABLA, Surinder Singh, Greenville, SC South Carolina 29615 (US)
(74) Representative: Openshaw & Co.

(57) **Abstract**

A thermal barrier coating composition comprises:
A. a binder in an amount from about 1% wt. % to about 15 wt. % and:
B. a zirconia-containing powder comprising:
I. up to about 65 wt. % of a component comprising:
a. a first metal oxide selected from the group including ytterbia, neodymia, mixtures of ytterbia and neodymia, mixtures of ytterbia and lanthana, mixtures of neodymia and lanthana, and mixtures of ytterbia, neodymia and lanthana in an amount of from about 8 wt. % to about 55 wt. % of the component; and
b. a second metal oxide selected from the group including yttria, calcia, ceria, scandia, magnesia, india and mixtures thereof in an amount up to about 2 wt. % or less of the component; and

II. one or more of a third metal oxide selected from the group including:
a. hafnia in an amount up to about 2 wt. % or less of the component; and
b. tantala in an amount up to about 2 wt. % or less of the component; and
and a balance zirconia by weight.

## Description

The disclosure relates generally to a composition for a thermal barrier coating. In particular, the disclosure relates to compositions with a binder in thermal barrier coating systems.

### BACKGROUND

Gas turbine engines include a compressor section for supplying a flow of compressed combustion air, a combustor section for burning fuel in the compressed combustion air, and a turbine section for extracting thermal energy from the combustion air and converting that energy into mechanical energy in the form of a rotating shaft.

Modern high efficiency combustion turbines have firing temperatures that exceed about 1,000 °C, and even higher firing temperatures are expected as the demand for more efficient engines continues. Many components that form the "hot gas path" combustor and turbine sections are directly exposed to aggressive hot combustion gasses, for example, the combustor liner, the transition duct between the combustion and turbine sections, and the turbine stationary vanes and rotating blades and surrounding ring segments. In addition to thermal stresses, these and other components are also exposed to mechanical stresses and loads that further wear on the components.

Many of the cobalt and nickel based superalloy materials traditionally used to fabricate the majority of combustion turbine components used in the hot gas path section of the combustion turbine engine (hereinafter "hot gas path components") are insulated from the hot gas flow by coating the components. The coating is typically a thermal barrier coating (TBC) in order to survive long term operation in aggressive high temperature combustion environments. Long term operation of hot gas path components and gas turbines reduces expenditures and costs for energy production.

### BRIEF DESCRIPTION

A first aspect of the disclosure provides a composition, where the composition comprises: a binder in an amount from about 1% to about 15% wt. and a zirconia-containing powder. The zirconia-containing powder comprises: I) up to about 65 wt. % of a component comprising: a.) a first metal oxide selected from the group including ytterbia, neodymia, mixtures of ytterbia and neodymia, mixtures of ytterbia and lanthana, mixtures of neodymia and lanthana, and mixtures of ytterbia, neodymia and lanthana in an amount of from about 8% to about 55 wt. % of the component; and b.) a second metal oxide selected from the group including yttria, calcia, ceria, scandia, magnesia, india and mixtures thereof in an amount up to about 2 wt. % or less of the component; and II.) one or more of a third metal oxide selected from the group including a.) hafnia in an amount up to about 2 wt. % or less of the component; and b.) tantala in an amount up to about 2 wt. % or less of the component; and, a balance zirconia by weight.

A second aspect of the disclosure provides thermal barrier coating (TBC) system. The TBC system is applied to a hot gas path component. The TBC system includes composition, where the composition includes: a binder in an amount from about 1% to about 15% wt. and a zirconia-containing powder. The zirconia-containing powder comprises: I) up to about 65 wt. % of a component comprising: a.) a first metal oxide selected from the group including ytterbia, neodymia, mixtures of ytterbia and neodymia, mixtures of ytterbia and lanthana, mixtures of neodymia and lanthana, and mixtures of ytterbia, neodymia and lanthana in an amount of from about 8% to about 55 wt. % of the component; and b.) a second metal oxide selected from the group including yttria, calcia, ceria, scandia, magnesia, india and mixtures thereof in an amount up to about 2 wt. % or less of the component; and II.) one or more of a third metal oxide selected from the group including a.) hafnia in an amount up to about 2 wt. % or less of the component; and b.) tantala in an amount up to about 2 wt. % or less of the component; and, a balance zirconia by weight.

A third aspect of the embodiments set forth a putty including a thermal barrier coating (TBC) composition, where the composition includes: a binder in an amount from about 1% to about 15% wt. and a zirconia-containing powder. The zirconia-containing powder comprises: I) up to about 65 wt. % of a component comprising: a.) a first metal oxide selected from the group including ytterbia, neodymia, mixtures of ytterbia and neodymia, mixtures of ytterbia and lanthana, mixtures of neodymia and lanthana, and mixtures of ytterbia, neodymia and lanthana in an amount of from about 8% to about 55 wt. % of the component; and b.) a second metal oxide selected from the group including yttria, calcia, ceria, scandia, magnesia, india and mixtures thereof in an amount up to about 2 wt. % or less of the component; and II.) one or more of a third metal oxide selected from the group including a.) hafnia in an amount up to about 2 wt. % or less of the component; and b.) tantala in an amount up to about 2 wt. % or less of the component; and a balance zirconia by weight.

The illustrative aspects of the present disclosure are designed to solve the problems herein described and/or other problems not discussed.

### DETAILED DESCRIPTION

As an initial matter, in order to clearly describe the current technology it will become necessary to select certain terminology when referring to and describing gas turbine technology and components. To the extent possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, as described below. The terms "first", "second", and "third" may be used interchangeably to distinguish one component from another and are not intended to signify location or importance of the individual components.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components but do not preclude the presence or addition of one or more other features, integers, steps, operations, elements, components, and/or groups thereof. "Optional" or "optionally" means that the subsequently described event or circumstance may or may not occur, and that the description includes instances where the event occurs and instances where it does not.

Where an element or layer is referred to as being "on," "engaged to," "connected to" or "coupled to" another element or layer, it may be directly on, engaged, connected or coupled to the other element or layer, or intervening elements or layers may be present. In contrast, when an element is referred to as being "directly on," "directly engaged to," "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

As noted above, TBCs are highly advanced material systems. TBCs are applied to components that form the "hot gas path" of combustor and turbine sections in gas turbine engines. These hot gas path components are often directly exposed to aggressive hot combustion gasses, for example, the combustor liner, the transition duct between the combustion and turbine sections, and the turbine stationary vanes and rotating blades and surrounding ring segments. TBCs serve to insulate the components from large and prolonged heat loads by utilizing thermally insulating materials, which can sustain an appreciable temperature difference between the load bearing alloys and the coating surface. In doing so, these coatings can allow for higher operating temperatures while limiting the thermal exposure of structural components, extending component life by reducing oxidation and thermal fatigue.

TBC systems can include four layers: the metal substrate, metallic bond coat, thermally grown oxide, and ceramic topcoat. The ceramic topcoat is typically composed of yttria-stabilized zirconia (YSZ), which is desirable for having very low thermal conductivity while remaining stable at nominal operating temperatures typically seen in applications. TBCs fail (or spall) through various degradation modes that include mechanical rumpling of bond coat during thermal cyclic exposure, accelerated oxidation, hot corrosion, and molten deposit degradation. With the loss of the TBC, the component experiences much higher temperatures and the component life is reduced dramatically. Accordingly, maintaining TBC system's integrity is important in combustion turbine life.

Additionally, TBC systems may develop an imperfection through use; be damaged during handling, installation, or service; be damaged during post coating processing; or be formed with an imperfection. The imperfection may include, but is not limited to, areas where TBC has been damaged, divots, chips, voids, scratches, deviations in coating thickness, or any other factor that is not desirable for a TBC system now known or hereinafter realized (all of the above will be referred to as "imperfections" for ease of description). In order to avoid costly stripping and recoating the entire hot gas path component or scrapping an entire hot gas path component, providing a TBC repair material compatible with, or better than, the existing, thermal and physical properties of the existing TBC would enable cost avoidance and enhance component life for service providers and turbine owners.

Accordingly, a thermal barrier coating (TBC) system, as embodied by the disclosure, provides a composition including a binder and ceramic powder. The binder and ceramic powder when together form a putty. The resultant TBC putty composition (hereinafter referred to as "TBC composition" for ease of description) includes binder in a 1-15 wt. % of the composition, and the remainder of the composition including a ceramic powder, such as zirconia-containing powder, where the sum total of the weights of the constituents is 100%. The putty can be used to fill imperfections in a TBC system on a hot gas path component of a gas turbine engine. Additionally, if necessary, TBC composition can be applied to large areas of an existing TBC applied to a hot gas path component.

In accordance with the disclosure, the binder of TBC composition includes:
1-5% silicone resin by wt. %;
0-5% gum by wt. %;
0-5 % acetate by wt. %;
1-5% polyalkylene glycol copolymer by wt. %; and
a remainder at least one of alcohol, water, or combination thereof.

In a further aspect of the embodiments, the ceramic powder includes a zirconia-containing powder. The zirconia-containing powder, as embodied by the disclosure, includes at least a first metal oxide, a second metal oxide, and a third metal oxide.

In accordance with the embodiments of the disclosure, the first metal oxide can be selected from the group including of ytterbia, neodymia, mixtures of ytterbia and neodymia, mixtures of ytterbia and lanthana, mixtures of neodymia and lanthana, and mixtures of ytterbia, neodymia and lanthana in an amount of from about 8 to about 55 wt. % of the zirconia-containing powder. In accordance with the embodiments of the disclosure, the first metal oxide includes at least one of ytterbia, lanthana, or combinations thereof.

Also in accordance with the embodiments of the disclosure, the second metal oxide can be selected from the group including yttria, calcia, ceria, scandia, magnesia, india and mixtures thereof in an amount up to about 2 wt. % or less of the zirconia-containing powder. In further accordance with the embodiments of the disclosure, the second metal oxide includes at least one of yttria, ceria, or combinations thereof.

Additionally, in accordance with the embodiments of the disclosure, the third metal oxide can be selected from the group including a) hafnia in an amount up to about 2 wt. % or less of the component; and b) tantala in an amount up to about 2 wt. % or less of the zirconia-containing powder. Therefore in accordance with the embodiments of the disclosure, the third metal oxide includes at least hafnia.

For applications of the TBC composition as embodied by the disclosure, the binder and zirconia-containing powder are combined, and a TBC putty composition is formed. The TBC putty composition can be provided in and/or around the imperfection on the hot gas path component, regardless of how the imperfection was formed. Moreover, the TBC putty composition can be provided in and/or around the imperfection on the hot gas path component, regardless of when the defect is identified. Further, the TBC putty composition may be provided in and/or around the imperfection on the hot gas path component, with the component *in situ* or removed from the gas turbine engine. After addressing the imperfection, the TBC putty composition may be spread to fill the imperfection if needed, and any post application processing, such as curing, drying, further coating treatments may be conducted.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about" as applied to a particular value of a range applies to both end values, and unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. A composition, comprising:
A. a binder in an amount from about 1% by weight (wt. %) to about 15 wt. % and;
B. a zirconia-containing powder comprising:
I. up to about 65 wt. % of a component comprising:
a. a first metal oxide selected from the group including ytterbia, neodymia, mixtures of ytterbia and neodymia, mixtures of ytterbia and lanthana, mixtures of neodymia and lanthana, and mixtures of ytterbia, neodymia and lanthana in an amount of from about 8 wt. % to about 55 wt. % of the component; and
b. a second metal oxide selected from the group including yttria, calcia, ceria, scandia, magnesia, india and mixtures thereof in an amount up to about 2 wt. % or less of the component; and
II. one or more of a third metal oxide selected from the group including:
a. hafnia in an amount up to about 2 wt. % or less of the component; and
b. tantala in an amount up to about 2 wt. % or less of the component; and
III. a balance zirconia by weight.

2. The composition of claim 1, wherein the binder includes:
1 wt. % -5 wt. % silicone resin;
0 wt. % -5 wt. % gum;
0 wt. % -5 wt. % acetate;
1 wt. % -5 wt. % polyalkylene glycol copolymer; and
a remainder at least one of alcohol, water, or combination thereof.

3. The composition of claim 2, wherein the first metal oxide includes at least one of ytterbia, lanthana, or combinations thereof.

4. The composition of claim 2, wherein the second metal oxide includes at least one of yttria, ceria, or combinations thereof.

5. The composition of claim 2, wherein the third metal oxide includes at least hafnia.

6. The composition of claim 2, wherein the first metal oxide includes at least one of ytterbia, lanthana, or combinations thereof; wherein the second metal oxide includes at least one of yttria, ceria, or combinations thereof; and wherein the third metal oxide includes at least hafnia.

7. The composition of claim 1, wherein the first metal oxide includes at least one of ytterbia, lanthana, or combinations thereof.

8. A thermal barrier coating (TBC) system, the TBC system applied to a hot gas path component, the TBC system comprising:
A. a binder in an amount from about 1 weight % (% wt.) to about 15% wt.; and
B. a zirconia-containing powder comprising:
I. up to about 65 wt. % of a component comprising:
a. a first metal oxide selected from the group consisting of ytterbia, neodymia, mixtures of ytterbia and neodymia, mixtures of ytterbia and lanthana, mixtures of neodymia and lanthana, and mixtures of ytterbia, neodymia and lanthana in an amount of from about 8 wt. % to about 55 wt. % of the component; and
b. a second metal oxide selected from the group consisting of yttria, calcia, ceria, scandia, magnesia, india and mixtures thereof in an amount up to about 2 wt. % or less of the component; and
II. one or more of a third metal oxide selected from the group consisting of:
a. hafnia in an amount up to about 2 wt. % or less of the component; and
b. tantala in an amount up to about 2 wt. % or less of the component; and
III. a balance zirconia by weight.

9. The thermal barrier coating (TBC) system of claim 8, wherein the binder includes:
1 wt. % -5 wt. % silicone resin;
0 wt. % -5 wt. % gum;
0 wt. % -5 wt. % acetate;
1 wt. % -5 wt. % polyalkylene glycol copolymer; and
a remainder at least one of alcohol, water, or combination thereof.

10. The thermal barrier coating (TBC) system of claim 8, wherein the first metal oxide includes at least one of ytterbia, lanthana, or combinations thereof.

11. The thermal barrier coating (TBC) system of claim 8, wherein the second metal oxide includes at least one of yttria, ceria, or combinations thereof.

12. The thermal barrier coating (TBC) system of claim 8, wherein the third metal oxide includes at least hafnia.

13. The thermal barrier coating (TBC) system of claim 8, wherein the first metal oxide includes at least one of ytterbia, lanthana, or combinations thereof; wherein the second metal oxide includes at least one of yttria, ceria, or combinations thereof; and wherein the third metal oxide includes at least hafnia.

14. The thermal barrier coating (TBC) system of claim 8, wherein the second metal oxide includes at least one of yttria, ceria, or combinations thereof.

15. A putty thermal barrier coating (TBC) composition comprising:
A. a binder in an amount from about 1 % weight (% wt.) to about 15% wt. and:
B. a zirconia-containing powder comprising:
I. up to about 65 wt. % of a component comprising:
a. a first metal oxide selected from the group consisting of ytterbia, neodymia, mixtures of ytterbia and neodymia, mixtures of ytterbia and lanthana, mixtures of neodymia and lanthana, and mixtures of ytterbia, neodymia and lanthana in an amount of from about 8 wt % to about 55 wt. % of the component; and
b. a second metal oxide selected from the group consisting of yttria, calcia, ceria, scandia, magnesia, india and mixtures thereof in an amount up to about 2 wt. % or less of the component; and
II. one or more of a third metal oxide selected from the group consisting of:
a. hafnia in an amount up to about 2 wt. % or less of the component; and
b. tantala in an amount up to about 2 wt. % or less of the component; and
III. a balance zirconia by weight; and
wherein the binder includes:
1 wt. % -5 wt. % silicone resin;
0 wt. % -5 wt. % gum;
0 wt. % -5 wt. % acetate;
1 wt. % -5 wt. % polyalkylene glycol copolymer; and
a remainder at least one of alcohol, water, or combination thereof; and
wherein the first metal oxide includes at least one of ytterbia, lanthana, or combinations thereof;
wherein the second metal oxide includes at least one of yttria, ceria, or combinations thereof; and wherein the third metal oxide includes at least hafnia.
